# EUROPEAN PATENT SPECIFICATION

(11) **EP 2 499 101 B1**
(45) Date of publication and mention of the grant of the patent: **04.04.2018**
(21) Application number: 10781728.0
(22) Date of filing: 12.11.2010
(51) Int. Cl.: F27B 1/00, C03B 3/02, C03B 5/04, C03B 5/167

(54) **MELTING METHOD AND APPARATUS**
SCHMELZVERFAHREN UND VORRICHTUNG
PROCÉDÉ ET APPAREIL DE FUSION

(30) Priority: 13.11.2009 GB 0919946
(43) Date of publication of application: 19.09.2012
(73) Proprietor: Pauli, Roger, West Midlands DY7 5BD (GB)
(72) Inventor: Pauli, Roger, West Midlands DY7 5BD (GB)
(74) Representative: J A Kemp
(86) International application number: PCT/GB2010/002088
(87) International publication number: WO 2011/058323

(56) References cited:
- EP-A1- 2 133 315
- WO-A1-2004/078664
- DE-A1- 4 103 129
- DE-A1-102009 009 942
- DE-A1-102009 009 942
- GB-A- 871 922
- US-A- 3 944 713
- US-A- 4 325 724
- US-A- 4 492 594
- US-A- 4 798 616
- US-A- 4 877 449
- US-A1- 2005 039 491

## Description

### Field of the Invention

The invention relates to methods of melting a raw material such as glass, and an apparatus for use in such melting processes.

### Background to the Invention

The processing of raw materials such as glass or metals typically involves a high temperature melting step in which a solid raw material such as glass batch is melted to form a molten pool which can then be further processed or refined. Melting is typically carried out in a melting chamber by use of a continuous process. The melting chamber contains a pool of molten material to which additional solid material is added. The chamber is heated, for example by heating the chamber walls, by reflection from the crown of the furnace, or by other external heat source, to effect melting of the solid raw material.

This conventional melting process has a number of draw-backs. In particular, the melting process can be very slow. In the case of glass, the molten pool of material insulates the newly added solid glass batch from the heat source leading to a particularly slow and inefficient melting process. Alternative processes which involve heating by use of the Joule effect are used to speed up the heating process. For example, US 2,781,411 describes a process for melting glass by passing an electric current through the glass melt and controlling the speed of heat transfer by adjusting the current across the electrodes. However, many glass melting chambers still employ a heat transfer mechanism to melt or aid the melting of the glass batch.

A further problem with conventional melting processes is the long residency time which is required. The solid batch material is generally added to the top of a pool of molten material. Internal convention currents within the pool of molten material lead to mixing of the solid glass batch with the molten glass. This mixing through convention currents means that a long residency time is required to ensure complete melting and homogenisation of the glass. A further difficulty with currently used melting chambers is the need to run the process continuously. Conventional chambers cannot be rapidly heated and cooled due to the difficulties of thermal shock and it is therefore necessary to employ controlled heating and cooling. Due to this difficulty, melting chambers are typically run continuously so that the time consuming and damaging controlled heating and cooling is avoided. However, in the case of speciality materials where a continuous process is undesirable, the inefficient controlled heating and cooling steps cannot be avoided. Further, any change in product composition may also require the furnace to be cooled, purged and then reheated.

A particular problem associated with the melting of glass relates to the presence of bubbles in the melted glass batch. Numerous techniques have been proposed to speed the removal of such bubbles. For example, US 4,504,302 proposes a homogenizer to aid mixing of the glass melt and formation of bubbles. Similarly, WO 83/00685 proposes the use of a pressurised gas in the furnace to collapse any bubbles in the melt, and a second chamber having a homogenizer to remove bubbles.

Glass melts may also suffer from contamination through contact with the chamber walls in currently used melting furnaces. Since melting is typically achieved by heat transfer from the chamber walls or crown, a large surface area of the melt will typically contact the chamber walls. This leads to an increased likelihood of contamination on contact with the walls. It has been proposed to use noble metals to form the chamber walls to avoid such contamination, but at the high temperatures in the melting chamber some chamber damage or contamination even with these materials may occur.

Typical glass melting chambers operate at a temperature in the region of 1450°C. Higher temperatures are difficult to achieve, particularly given the insulation effect of the glass melt and the chamber/refractory materials. Pure silica melts at a temperature of 1700°C or greater, however, so it has typically been necessary to add metal oxide salts to the glass batch in order to bring the melting temperature down. For example, US 3,785,793 discusses the difficulties of processing high silica glass and proposes the addition of P₂O₅ as well as other alkali metal oxides to aid processing of the glass. The limitations of the temperature of operation of the melting furnaces currently in use therefore impose undesired limitations on the composition of glass which can be produced.

DE 41 03 129 describes processes for melting glass using support elements which facilitate effective support of the covering layer of batch which is spatially separated from the surface of the glass bath. For this, tubular, -rod or beam-shaped elements are used to form a grate under the covering layer of batch.

### Summary of Invention

The present invention aims to address the difficulties of the prior art discussed above and to provide an improved method for melting raw materials such as glass and metals. The present invention accordingly provides a process of melting a raw material by creating a flow of raw material interrupted by a heated phase separation barrier, wherein melting is achieved by transfer of heat from the phase separation barrier to the raw material, which process comprises:
- providing solid raw material to the phase separation barrier, wherein the phase separation barrier supports the solid raw material;
- heating the phase separation barrier to a temperature which is (a) at least 1200°C and (b) sufficient to cause melting of the solid raw material which contacts the barrier, wherein any melted raw material formed on contact with the phase separation barrier flows off or through the phase separation barrier; and
- collecting the melted raw material;
wherein the transfer of heat from the phase separation barrier causes separation of the solid and melted phases within the flow of the raw material, and wherein the phase separation barrier comprises a series of upright or inclined plates placed substantially in parallel.

A key feature of the method of the present invention is the separation or distinction of the solid and melted phases within the melting chamber. The glass batch or other solid raw material to be melted is thus in intimate contact with the heated phase separation barrier and heat transfer to the solid is more effective. The rate of melting is thus vastly improved compared with a standard melting furnace where heat is transferred through a pool of melted material or from the crown of the furnace. By use of the method of the present invention, the refining time (i.e. the residency time for glass in the furnace), for example, can be reduced from 30 to 40 hours to approximately 2 to 3 hours or even less.

A particular advantage of the separation of the solid and melted phases within the melting chamber is that the solid material is not drawn into convection currents within the melt. This leads to a substantially reduced residence time for homogenisation and fining of the melt. This has a particular benefit over processes and apparatus in which the heating element is submerged in the melt. In the latter case, the solid material is typically added to the top of the melt. As convection currents occur within the melt, this causes solid material to be mixed with melted material. The present invention entirely avoids this difficulty by separating the solid material from the melt.

A further advantage of the present invention is that it minimises contact between the melted raw material and the melting chamber walls. This helps to keep contamination from the chamber walls to a minimum. The reduced risk of contamination in turn enables a greater variety of different materials to be available for use as the chamber walls.

In the case of glass processing, the phase separation barrier of the invention provides a large contact area with the raw material as it melts, which aids the mixing of the glass batch constituents and the removal of gaseous inclusions from the melted glass.

In a particular embodiment of the invention, the heating element is separated from, i.e. not in contact with, the melted material which is collected at the base of the chamber. Thus, there is a gap, typically an air gap, between a melting zone containing the phase separation barrier and a collecting zone in which melted raw material is collected. Melted raw material accordingly falls through this gap following melting and before being collected at the base of the chamber. This has the benefit that any gases dissolved in the melt are encouraged to escape into the air as they fall from the phase separation barrier to be collected at the base of the chamber. The air gap therefore also aids removal of gaseous inclusions.

A particularly preferred embodiment of the invention employs a phase separation barrier of an inert, high melting temperature material such as fused quartz or iridium. These materials are inert in that they barely react on contact with vitreous glass and can be heated to temperatures in excess of 1550°C. Fused quartz is stable up to 1600°C, whilst iridium melts in the region of well above 2000°C. The use of phase separation barriers made of such materials enables very high temperature melting to be carried out without causing reaction with the melted glass. The increased temperature further speeds up the rate of the melting process.

The use of such high temperature melting also provides the skilled person with greater flexibility as to the type of glass which can be processed. Typically, metal oxides are added to the glass batch in order to reduce the melting temperature. However, where the melting temperature is increased to 1550°C or more, e.g. by use of fused quartz or iridium as the phase separation barrier, the use of metal oxide salts can be reduced or even eliminated. The silica content of the glass can therefore be as high as 85%, and when using iridium phase separation barriers as high as 90%.

A further advantage of the use of fused quartz phase separation barriers is provided by its minimal thermal expansion (typically 0.5 x 10⁻⁶K⁻¹). This gives the phase separation barrier a very high thermal shock resistance, thus allowing rapid heating and charging of raw material such as glass batch into the melting chamber. The high resistance to thermal shock means that, unlike conventional melting furnaces, there is no requirement for controlled heat up of the chamber before the melting process begins. This makes the use of the process of the invention appropriate for both batch and continuous melting processes and provides flexibility with regard to the melting of speciality materials where continuous processes are inefficient. It also simplifies the process of changing the melt composition.

In one aspect, in addition to melting a first raw material as described above, the invention further comprises: providing a second solid raw material to a second melting chamber and heating the second solid raw material to a temperature T₂ which is sufficient to cause melting of the second solid raw material, and collecting the melted second raw material; and discharging at least a portion of the melted first raw material and at least a portion of the melted second raw material into a homogeniser chamber to provide a melt which comprises the first raw material and the second raw material.

Known processes for melting glass tend to focus on a single melting chamber, to which solid batch material is added. Mixing of the various ingredients of the glass typically occurs by mixing a number of raw materials in solid form prior to addition to the melting chamber. The present invention, however, provides a parallel melting method in which two or more components of the glass batch are melted separately and the thus produced melts are mixed in a separate stage.

This parallel melting technique has the advantage that the specific temperature to which each of the batch ingredients is heated can be controlled. Thus, for example, a high temperature melting chamber can be used for melting materials such as silica having a high melting temperature. Lower temperatures can be used in melting chambers intended to melt further ingredients.

The use of a lower temperature in a second melting chamber has a number of advantages. Firstly, any volatile materials such as lead oxide, which have a tendency to gasify at elevated temperature, can be melted in a controlled environment at a lower temperature. A further advantage is that energy is saved by not heating lower temperature additives to the high temperature required for melting silica. In addition, the use of a separate, lower temperature melting chamber can help to avoid the difficulty of preferential melting which typically occurs in a standard glass melting furnace. Preferential melting involves the melting of lower melting point materials within the glass batch in preference to higher melting point materials such as silica. This preferential melting leads to segregation of the raw materials and can increase the residency time. In the parallel melting technique of the present invention, this problem is addressed by separately melting groups of materials having compatible melting points.

A particular benefit of the parallel melting technique is that a very high temperature can be used to melt the silica component. This is possible in the present technique since other materials which are not compatible with very high temperature melting need not be passed through the high temperature melting chamber. This helps to ensure that the silica component is completely melted in a short period of time.

The parallel melting process can conveniently be carried out by operating a high temperature melting chamber on a continuous basis to provide a standard silica-based precursor. One or more separate melting chambers can be operated in a batch-wise manner to provide a series of different additives to be combined with the silica-based precursor. The process can therefore be usefully employed to provide a series of different types of glass by a convenient technique.

The process of the invention accordingly provides a greater degree of control over the melting process and thereby enables novel additives to be included in the final glass product, which have previously not been commercially accessible.

Also provided by the present invention is a melting apparatus for melting a raw material by creating a flow of raw material interrupted by a heated phase separation barrier, wherein the apparatus is adapted for melting the raw material, said apparatus comprising:
- a melting chamber (1) for melting raw material;
- a feed system (2) for providing solid raw material to the melting chamber;
- a phase separation barrier (3) located within the melting chamber, wherein the phase separation barrier is arranged for supporting solid raw material and for enabling any melted raw material formed on contact with the phase separation barrier to flow off or through the phase separation barrier, wherein the phase separation barrier comprises a series of upright or inclined plates (33) placed substantially in parallel, wherein the phase separation barrier is preferably made of fused quartz, iridium, platinum, a platinum/rhodium alloy or an alumina silicate ceramic, more preferably iridium;
- a heater adapted to heat the phase separation barrier to a temperature of at least 1200°C; and
- a collecting system (4) for collecting melted raw material;
wherein the phase separation barrier (3) is for separating solid and melted phases within the flow of raw material.

The melting apparatus described herein may comprise two or more melting chambers, wherein each melting chamber comprises an outlet arranged to discharge melted raw material from the melting chamber; and wherein the apparatus further comprises a homogeniser chamber arranged for receiving melted raw material which is discharged from the two or more melting chambers via the outlets. One or preferably all of the melting chambers comprise a phase separation barrier as set out above.

### Brief Description of the Drawings

Figure 1 schematically depicts a melting apparatus according to a reference example.
Figure 2a depicts an alternative phase separation barrier, for reference.
Figure 3 depicts a phase separation barrier according to the invention in situ in a melting apparatus according to the invention.
Figure 4 is a schematic depiction of the parallel melting process of the invention.
Figure 5 depicts an apparatus of the invention arranged to carry out a parallel melting process.
Figure 6 schematically depicts a parallel melting process arranged to provide two different melts simultaneously.

### Detailed Description of the Invention

The present invention will be described in detail with reference to the melting of glass, but the processes and apparatus are also useful in the melting of other raw materials such as metals, e.g. steel and aluminium. For example, the invention is particularly useful for melting aluminium. As used herein, the term raw material includes any material suitable for processing by use of a melting step. The raw material may be a natural product which has not yet undergone any processing steps. Alternatively, processed materials may be used. The term is therefore not intended to be limited to natural, unprocessed materials. Typically, the raw material is one which melts at a temperature of 1200°C or greater, or which comprises one or more components which melt at a temperature of 1200°C or greater.

Any reference to a raw material herein may be a reference to a single material such as substantially pure silica, or it may be a reference to a mixture of materials, for example silica combined with one or more additives such as viscosity modifiers and/or metal oxides.

A solid raw material as used herein is the material prior to melting, whereas the melted raw material is the flowable material produced after melting. In the case of a glass melting process, the solid raw material is typically a friable or crystalline material (e.g. glass batch), whereas the melted raw material is a vitreous material. Any reference herein to a solid material, in the case of glass can therefore be considered a reference to friable or crystalline material, whilst any reference to melted material, in the case of glass can be taken as a reference to vitreous material.

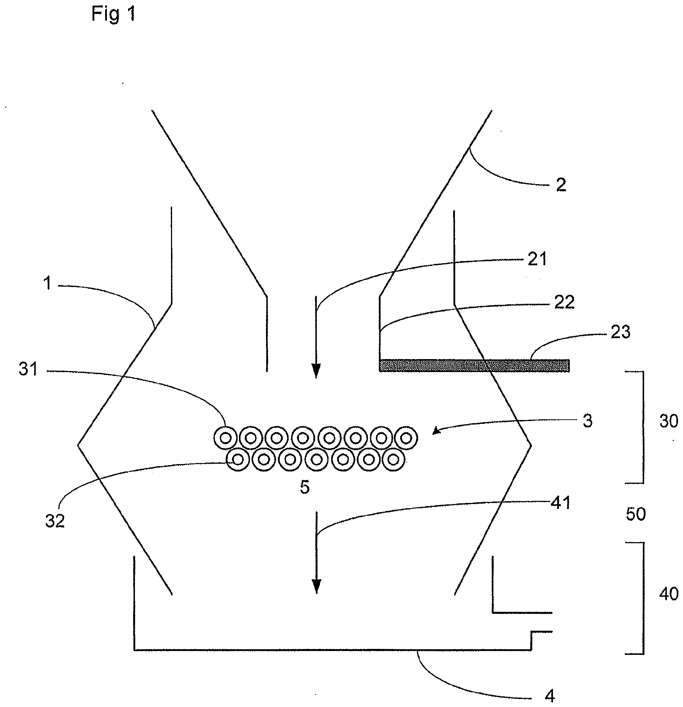

A melting furnace according to a reference example is depicted in Figure 1. The furnace comprises a melting chamber 1 having a feed system 2 for supplying solid raw material. The feed system may be any conventional glass furnace feeder such as a hopper having an outlet 22. The hopper may be heated. An example of an appropriate feed system is an optionally water-heated vibratory feed tray. Solid glass constituents (glass batch) are contained in the feed system and provided to the melting chamber 1 through outlet 22 in the direction of arrow 21. The feed system may be closeable in order to provide solid material to the melting chamber as desired. For example, a closeable valve 23 may be provided.

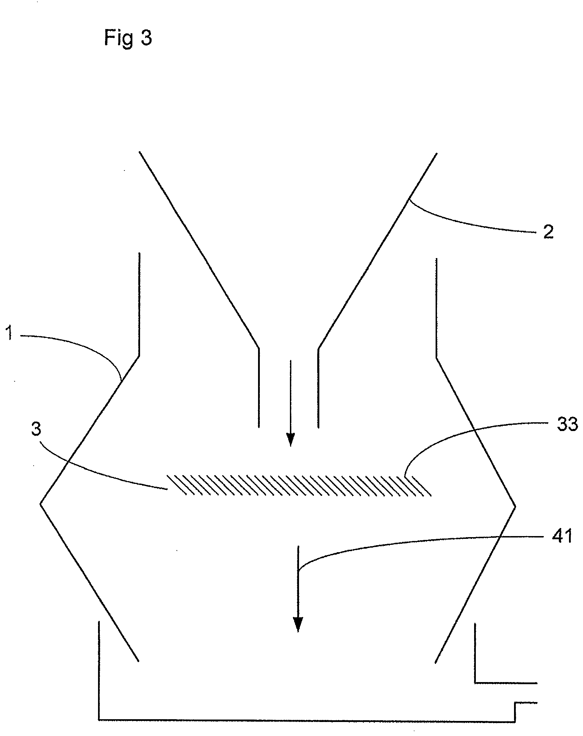

The melting chamber 1 incorporates a melting zone 30 which contains the phase separation barrier 3. Solid glass batch, provided from feed system 2, enters the melting chamber and rests on phase separation barrier 3. A spreader (not depicted) may be used to maintain a layer of cold glass batch on the barrier. The phase separation barrier is thus capable of supporting the glass batch. Typical glass batch is provided in the form of crystals or pellets having a diameter in the order of 3mm or greater. This has the advantage that air which is released from the melted glass can escape between the pellets into the space above the batch. The geometry of the phase separation barrier must be selected so that it is capable of supporting the solid raw material used, and so that solid material does not fall through the barrier before melting. A phase separation barrier according to the invention is depicted in Figure 3.

The phase separation barrier 3 is heated to effect melting of the glass batch. Thus, heat transfer is achieved by means of intimate contact between the glass and the barrier. In some instances, a very thin film of melted material may remain on the surface of the phase separation barrier. In this case, heat transfer may be radiated through this very thin film of melted raw material.

On melting, the vitreous glass produced flows through or off the phase separation barrier in the direction of arrow 41 and is collected, for example in a drip tray or second chamber 4, located in a collecting zone 40. The vitreous glass begins to flow off or through the phase separation barrier as soon as it is in the melted state, ensuring efficient phase separation. The movement of the glass from the feed system, through the melting chamber and into the collecting system thus forms a flow of glass materials, typically a substantially vertical flow. This vertical flow is interrupted by the phase separation barrier, with the barrier forming the boundary between solid material which is supported on the barrier, and melted material which flows through or off the barrier. This separation of the solid and melted phases provides more efficient heat transfer to the solid material since the solid material either directly contacts the phase separation barrier or is separated only by a thin layer of melted material which has yet to flow off or through the barrier. Typically, where melted material remains on the barrier, any such layer of melted material has a thickness of no more than 3mm, preferably no more than 1mm.

The melting zone 30 is separated from the collecting zone 40 by an air gap 50. Thus, the phase separation barrier 3 is sufficiently separated from drip tray or second chamber 4 that the phase separation barrier is not in contact with the melted glass which is collected in the drip tray or second chamber 4. Thus, melted glass falls off or through the phase separation barrier through the air gap 50 in the region of arrow 41, before it is collected in drip tray or second chamber 4.

The collecting zone is optionally temperature controlled. Heating may be provided, for example, by heating the base and/or walls of the collecting zone. Heating the base can be advantageous as it helps to develop convection currents which assists homogenisation of the melt. Alternatively or additionally, cooling may be provided, for example a water-cooled jacket.

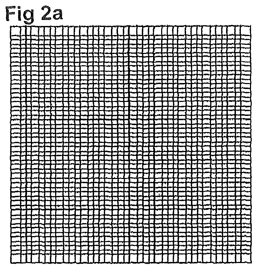

The geometry of the phase separation barrier must be selected so that it is capable of supporting the solid material, but so that melted material flows off or through the barrier, thus providing phase separation. A number of different phase separation barriers are depicted in the Figures, for reference. Figure 2a (reference example) depicts in plan view a barrier comprising a substantially horizontal support having a number of apertures, for example a grille or grid. In this case, the barrier is in the form of a grid. The apertures typically have a maximum size (length and width, or diameter in the case of circular apertures) of up to 10mm, e.g. up to 5mm, preferably they are in the region of 2-3mm or less, more preferably 1mm or less. The apertures are typically separated by no more than 10mm, preferably no more than 5mm. If the apertures are too large, the barrier may not sufficiently support the glass batch and solid material may fall through the barrier. On the other hand, if the apertures are too small or too widely spaced, the viscosity of the glass melt may slow or even prevent the flow of the glass through the apertures. The precise size and spacing of the apertures is therefore dependent on the size of the glass batch and the viscosity of the melted glass at the temperature of the melting chamber.

The area 5 underneath the phase separation barrier may be maintained at reduced pressure which also has the effect of facilitating movement of the melted glass through the apertures in the phase separation barrier.

In Figure 3, the phase separation barrier 3 is made up of a series of adjacent plates or fins 33. The fins may be upright (i.e. vertical or substantially vertical) or they may be inclined. Suitable angles of inclination are up to 45°, e.g. up to 20° or 10°. As for the bars depicted in Figure 1, the fins are typically placed substantially in parallel and are sufficiently close together to support solid raw material which is placed onto the phase separation barrier. For example, the fins are preferably placed at a distance of no more than 10mm, preferably no more than 5mm, e.g. no more than 1mm from the neighbouring fin(s). If desired, two or more rows of fins can be employed, with the further row(s) of fins placed underneath the first row. The second row of fins is typically displaced compared with the first row, such that melted material flowing off the upper row of fins falls onto the upper part of the lower row of fins.

The phase separation barrier is made of a material which can be heated to the desired melting temperature and which is unreactive with the raw material used. In the case of glass, preferred materials for the phase separation barrier include fused quartz and inert metals (e.g. platinum and iridium). The phase separation barrier may be made of an alloy, for example a platinum/rhodium alloy, or of a composite material. For example, the phase separation barrier may be made of a material which is not fully inert or unreactive at the temperatures used in the melting chamber, but which is coated with an inert and unreactive material. Examples include metals having a platinum or iridium coating, for example molybdenum coated with platinum or iridium.

Fused quartz and iridium are preferred materials for the phase separation barrier. Fused quartz has a distortion temperature in excess of 1600°C, whilst iridium has a melting temperature in excess of 2000°C. Both materials can therefore be used at a temperature appropriate for glass melting and both are unreactive or have limited reactions with glass. Where the raw material is aluminium, a suitable material for the phase separation barrier is a ceramic such as an alumina silicate ceramic.

Some materials which can be used for the phase separation barrier are not fully inert to oxidation at the temperatures of the melting chamber, in particular the high temperatures discussed herein. For example, where iridium is used as the phase separation barrier, oxidation may occur at very high temperature if the phase separation barrier is exposed to the air. In the case of materials such as iridium which are susceptible to oxidation, it is advantageous to maintain a thin film of melted raw material on the phase separation barrier in order to prevent contact of the phase separation barrier with the air. Preferably, the film of melted raw material will cover the entire surface of the phase separation barrier.

The thickness of the film of melted raw material is typically in the range of from 0.1 to 5mm, for example from 0.5 to 3mm. The film should be as thin as possible to ensure maximum heat transfer from the phase separation barrier to the solid glass batch, whilst ensuring that the film is sufficiently thick to completely cover the phase separation barrier. The maximum thickness of the film is typically in the region of about 5mm. If the film becomes too thick, convention currents may occur in the liquid above the phase separation barrier which may cause solid material to be drawn into the melt, leading to ineffective phase separation. In practice, the solid batch may be partially submerged in the melted raw material. However, it is preferred that the film of melted material on the phase separation barrier is sufficiently thin that solid raw material does not become fully submerged; and this may be aided by increasing the particle size of the raw material by pelletisation.

Where the phase separation barrier is made of a material which is inert to oxidation at the temperature used in the melting chamber, it is not necessary to retain a film of melted raw material on the phase separation barrier. In this case, the thickness of any melted raw material on top of the phase separation barrier is minimised in order to ensure maximum heat transfer to the solid raw material. Thus, the melted raw material on the phase separation barrier is preferably less than 1mm in thickness.

The thickness of the film of raw material which is maintained on top of the phase separation barrier can be controlled by adapting the geometry of the phase separation barrier, for example by increasing or decreasing the size of the apertures in the phase separation barrier to allow the melted glass to flow through the barrier at a faster or slower speed. The film thickness may also be controlled by varying the temperature of the phase separation barrier, and thus the viscosity of the melted raw material.

The phase separation barrier is heated to a temperature of at least 1200°C and sufficient to cause melting of the raw material used. Typically, the phase separation barrier is heated to a temperature of at least 1500°C, e.g. at least 1550°C, more preferably at least 1600°C. The higher temperature has the benefit of increasing the rate of melting and also reducing the viscosity of the melted glass, thus aiding gas evolution from the melt.

The apparatus includes a heater to heat the phase separation barrier to the required temperature. The nature of the heater is not particularly important. As depicted in the reference example of Figure 1, the phase separation barrier may be hollow, in the reference example a series of hollow tubes 31. In this case, the phase separation barrier is preferably internally heated. This may be achieved, for example, by providing one or more heating elements 32 within the tubes, or providing a gas flame or exhaust gasses within the tubes.

Once melted the vitreous glass is collected, for example in a drip tray, in the bottom of the melting chamber, or in a second chamber provided for collection of the melted glass. Refining agents may be added to the glass, either to the flow of glass within the melting chamber, or after collection, in order to further refine the glass. Further processing and/or refining steps may be carried out as desired and the glass or other raw material may ultimately be shaped to produce a finished article or artifact.

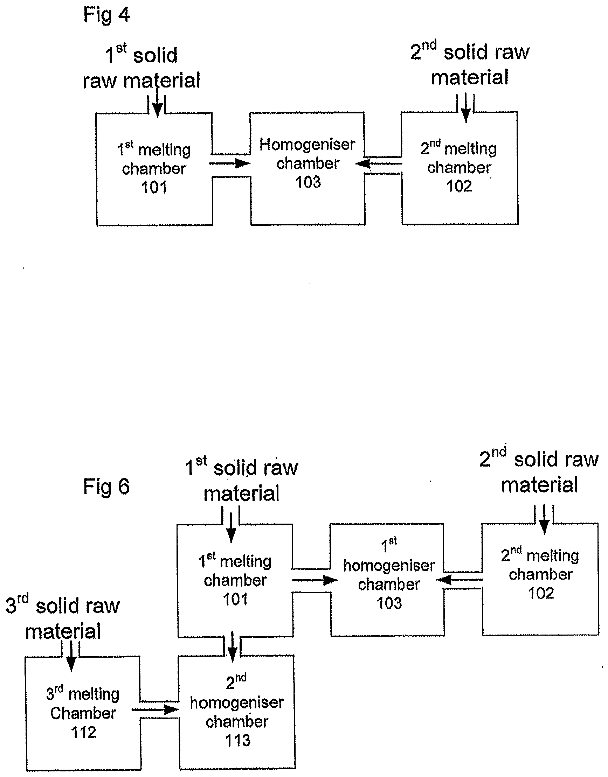

A further embodiment of the invention is depicted schematically in Figure 4. In this embodiment, two melting chambers 101, 102 are connected to a separate homogeniser chamber 103. In this embodiment, a first solid raw material is provided to the first melting chamber 101, in which it is melted. The melted first raw material is then discharged into the homogeniser chamber 103. A second melting chamber 102 operating in parallel with the first similarly melts a second solid raw material and the thus produced melt is discharged into the homogeniser chamber 103 where it is mixed with the first melted raw material. If desired, further melting chambers may also be incorporated into the apparatus to melt a further raw material which can subsequently also be discharged into the homogeniser chamber. Thus, the process involves the separate, parallel melting of different components of the batch and the subsequent mixing of the components in their melted state.

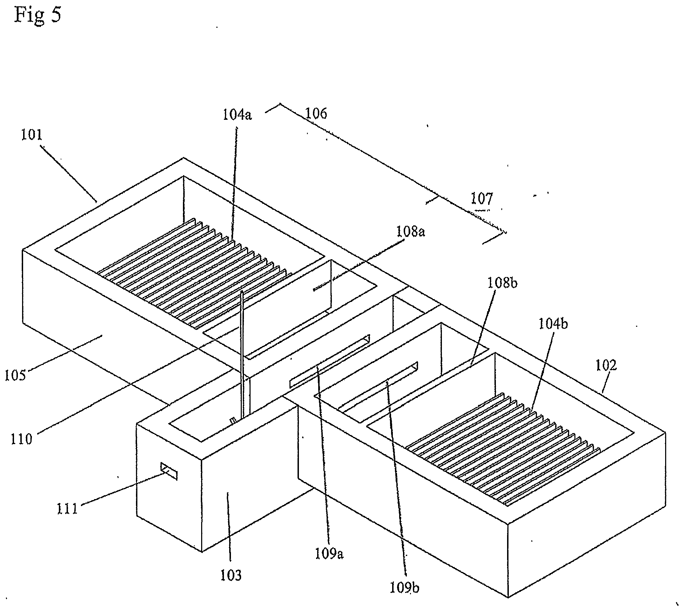

An apparatus according to this embodiment is depicted in more detail in Figure 5. The melting chambers are the same as those of the above mentioned embodiments, except as described herein. Melting chambers 101 and 102 incorporate phase separation barriers 104a, 104b which are heated to temperatures T₁, T₂, respectively. Each phase separation barrier is formed of a series of parallel inclined plates, or fins. A water-cooled jacket 105 is provided around the collecting zone of the first melting chamber 101 to provide cooling of the melt, as required.

Figure 5 depicts a preferred embodiment of the invention in which the two melting chambers are phase separation melting chambers in accordance with the invention. However, alternative types of melting chamber may also be used in parallel. For example, one melting chamber may be a chamber in which heating is provided to the melt, e.g. by use of the Joule effect. Further, although it is convenient to use two melting chambers which operate using the same type of heating means, it is also envisaged that one melting chamber is a phase separation melting chamber in accordance with the present invention, whilst the second melting chamber heats the raw material by an alternative means. Further, in the case where two phase separation melting chambers are used, the phase separation barriers used in the two chambers may be made of the same or different materials, and may have the same or different geometries.

Each melting chamber comprises a melting zone 106 in which the phase separation barrier is located and a separate fining zone 107. A separator 108a, 108b is located between the two zones. Melted material which is collected in the collecting zone beneath the phase separation barrier passes under the separator and into the fining zone. The fining zone may be provided with heating means (e.g. heated base or walls, not depicted) to assist in fining the melt.

An outlet 109a, 109b is provided in each melting chamber to enable melted material to pass from the melting chamber to the homogeniser chamber. A valve (not depicted) may be present at one or both of the outlets to control the flow of melted material from the melting chamber to the homogeniser chamber. In the depicted embodiment, melted raw material passes into a fining zone prior to discharge into the homogeniser chamber. However, where no fining zone is present, the outlet may be at the base of the separator 108a, 108b such that melted material passes directly from the collecting zone beneath the phase separation barrier to the homogeniser chamber.

The process is typically carried out continuously. Thus, the first raw material is continuously melted and the melted material produced is continuously discharged to the homogeniser chamber. Similarly, the second raw material is continuously melted and continuously discharged to the homogeniser chamber from the second melting chamber. It is also envisaged that one or both of the melting chambers be operated in a batchwise manner, i.e. a batch of the raw material is melted and collected, and only after melting is complete is the material subsequently discharged to the homogeniser chamber.

The homogeniser chamber receives melted material from each melting chamber and enables the two separate melted materials to mix to form a single melt. Stirrer driver 110 drives a mechanical stirrer (e.g. a propeller) which aids mixing of the melted materials. The homogeniser chamber is also provided with a heated base to generate convection currents in the melt, which also aids mixing.

A final outlet 111 discharges the resulting melt, which is a mixture of the first and second raw materials.

The first melting chamber 101 is typically the major component melting chamber and is used to melt the raw material comprising the main ingredient of the final melt. In the case of glass, the raw material fed to the first melting chamber comprises silica.

The first solid raw material fed to the first melting chamber may comprise silica in substantially pure form, or it may comprise silica together with one or more further materials. Typically, the first solid raw material comprises at least 50wt%, e.g. at least 70wt% or at least 85wt% silica. The first solid raw material may additionally comprise a viscosity modifier. Examples of suitable viscosity modifiers include metal carbonates such as alkali metal or alkaline earth metal carbonates, e.g. Ca, Na or K carbonate. The materials fed to the first melting chamber are typically selected so that they can withstand high temperatures of up to around 1850°C.

The first melting chamber is typically operated at a high temperature since it is used to melt silica, which melts at around 1700°C or higher in pure form. Appropriate temperatures for the first melting chamber are in the region of 1250 to 1850°C. Thus, the phase separation barrier 104a is preferably heated to a temperature T₁ of 1250 to 1850°C. In the case of a combination of silica with sodium carbonate, this leads to a melt having a viscosity in the region of 3 to 4 poise.

The second melting chamber is the minor component melting chamber and is typically used to melt one or more of the additives incorporated into the final glass product. Silica may also be present in the second raw material which is provided to the second melting chamber, but it is typically present in a smaller proportion of the overall second raw material than of the first raw material, e.g. no more than 50wt%, preferably no more than 30wt%.

Examples of suitable materials which are melted in the second melting chamber are metal oxides such as PbO and CaO. Metal oxides may be combined with one or more viscosity modifiers, for example an alkali metal or alkaline earth metal hydroxide such as sodium or potassium hydroxide. An alternative ingredient for the second melting chamber is a suitably compounded boron component. The second melting chamber may also be used to melt colourants. For example, glass components having concentrated colours, or other speciality glass materials may be added to the second melting chamber.

The temperature of the second melting chamber will depend on the exact nature of the raw material which is provided to the second melting chamber. However, in a typical case the temperature of the second melting chamber is lower than the temperature of the first melting chamber in order to avoid any adverse chemical reactions occurring within the second raw material. For example, in the case of PbO, it is advantageous to maintain a lower temperature in order to minimise evaporation of the PbO. Appropriate temperatures for the second melting chamber are in the region of at least 700°C, e.g. from 850 to 1500°C, preferably 850 to 1000°C. Thus, the phase separation barrier 104b of the second melting chamber is typically heated to a temperature T₂ of from 850 to 1500°C, preferably 850 to 1000°C. Preferably, the temperature of the second melting chamber is selected so as to provide a melt having a viscosity which is compatible with, i.e. within 1 to 2 poise of, the viscosity of the melted first raw material produced in the first melting chamber.

It is preferred that the temperature difference between the two melts on mixing in the homogeniser chamber is no more than approximately 500°C, for example no more than 400°C or no more than 200°C. Thus, the difference between the temperature T₃ of the first melted raw material on discharge into the homogeniser chamber, and the temperature T₄ of the second melted raw material on discharge into the homogeniser chamber is preferably no more than approximately 500°C, for example no more than 400°C or no more than 200°C. Minimising the temperature difference avoids any rapid temperature change occurring on contact of the two melts. The temperature difference between the two melts can be controlled by adjusting the temperature of the phase separation barriers (T₁, T₂) and also by adjusting the temperature of the melt in the collecting zone or fining zone of each melting chamber prior to discharge into the homogeniser chamber. Figure 4 provides a water cooling jacket 105 in the collecting zone of melting chamber 1 in order to lower the temperature of the melted first raw material to bring it closer to that of the melted second raw material prior to mixing in the homogeniser chamber.

It is further preferred that the viscosities of the two melted raw materials on discharge into the homogeniser chamber differ by no more than about 1 to 2 poise. Mixing of the two melted raw materials in the homogeniser chamber is more rapid if their viscosities are relatively similar. In a preferred aspect, the viscosity of the melted second raw material (the minor component) is greater than the viscosity of the melted first raw material (the major component). This has been found to increase the speed of homogenising when the two melts are mixed.

The parallel melting process may be carried out as follows:

### Example A

### First melting chamber:

Raw material: 75wt% silica, 25wt% sodium carbonate, total weight 200g
Phase separation barrier heated to: 1,600°C

### Second melting chamber:

Raw material: intensely coloured glass in an amount of up to 20g
Phase separation barrier heated to: 1450°C

### Example B

### First melting chamber:

Raw material: 75wt% silica, 25wt% sodium carbonate, total weight 200g
Phase separation barrier heated to: 1,600°C

### Second melting chamber:

Raw material: non-coloured, high Pb content glass having a PbO content of up to 92wt%
Phase separation barrier heated to: 950°C

The two melts are combined in a homogeniser chamber. This example is a batchwise process in which the entire melt from each chamber is discharged into the homogeniser chamber. In a continuous process, the two melts are combined at an appropriate ratio, e.g. first melt: second melt weight ratio of from about 2:1 to about 10:1, e.g. about 5.1.

A further embodiment of the invention is depicted schematically in Figure 6. In this embodiment, the apparatus incorporates a first homogeniser chamber 103 and a second homogeniser chamber 113. The first melting
chamber 101, which is used to melt the major component of the final product (typically silica) is connected to both the first homogeniser chamber 103 and the second homogeniser chamber 113. Thus, the first melting chamber is provided with two separate outlets which enable melted first raw material to be discharged into either or both of the first and second homogeniser chambers. Typically, a valve is provided over the outlets in order to control movement of melted material into the first and/or the second homogeniser chamber.

A second melting chamber 102 is provided, connected to the first homogeniser chamber 103 as described above. Similarly, a third melting chamber 112 is provided, connected to the second homogeniser chamber 113. A third solid raw material (typically different from the first and second solid raw materials) is fed to the third melting chamber to produce a third melted raw material which is discharged into the second homogeniser chamber. Thus, in the second homogeniser chamber, the first melted raw material is mixed with the third melted raw material. The embodiment depicted in Figure 6 therefore enables two different glass products to be produced in parallel, by use of a single major component melting chamber for melting the silica containing raw material.

### Examples

### Reference Example 1

A single silicon carbide (SiC) resistance heating element was placed inside a silica tube, with a total heated length of 200mm and a diameter of 30mm. Power was applied and the external temperature of the tube reached 1000°C in five minutes. The silica tube showed no signs of thermal shock or cracking as a result of the rapid heating rate employed.

### Reference Example 2

A glass melting trial was carried out using a melting chamber having a series of parallel silica tubes having a diameter of 30mm as the phase separation barrier. The tubes were placed 5 to 10mm apart. A pair of SiC elements was placed within each silica tube and heating carried out until an external temperature of 1200°C was reached. The melting chamber was an insulated cavity of dimension 225mm x 115mm x 225mm.

A pre-mixed lead glass batch was then added onto the hot surface of the phase separation barrier and the immediate reaction of this batch was seen, with the evolution of gas and the bubbling and reaction of the batch chemicals. The power supply to the SiC elements was then increased and the chamber temperature reached 1350°C during the trial. When the batch was added to this hot reaction chamber it was possible to bridge the gap between the heated silica tubes and use the system to act as a contact melter. Glass which had reacted then flowed over the tube surface and was collected in the base of the chamber.

During the trial, no failure or thermal shock was seen in the silica tubes and minimal reaction of the tubes was observed even after contact with the batch at temperatures around 1350°C for three to four hours.

The invention has been described with reference to several particular embodiments and examples, but it is to be understood that the invention is not intended to be limited to these embodiments and examples.

## Claims

1. A process of melting a raw material by creating a flow of raw material interrupted by a heated phase separation barrier (3), wherein melting is achieved by transfer of heat from the phase separation barrier (3) to the raw material, which process comprises:
(i) providing solid raw material to the phase separation barrier (3), wherein the phase separation barrier supports the solid raw material;
(ii) heating the phase separation barrier (3) to a temperature which is (a) at least 1200°C and (b) sufficient to cause melting of the solid raw material which contacts the barrier, wherein any melted raw material formed on contact with the phase separation barrier flows off or through the phase separation barrier; and
(iii) collecting the melted raw material;
wherein the transfer of heat from the phase separation barrier causes separation of the solid and melted phases within the flow of the raw material, and wherein the phase separation barrier comprises a series of upright or inclined plates (33) placed substantially in parallel.

2. A process according to claim 1, wherein the raw material melts at a temperature of 1200°C or greater and the phase separation barrier is heated to a temperature of 1200°C or greater.

3. A process according to claim 1 or 2, wherein the raw material is glass, and/or wherein the phase separation barrier is made of fused quartz, iridium, platinum, a platinum/rhodium alloy or an alumina silicate ceramic.

4. A process according to claim 3, wherein the phase separation barrier is made of iridium and wherein a film of melted raw material having a thickness of from 0.5mm to 5mm remains on the surface of the phase separation barrier prior to falling off or through the phase separation barrier.

5. A process according to any one of the preceding claims, wherein the phase separation barrier is heated to a temperature of 1500°C or greater.

6. A process according to any one of the preceding claims, wherein the phase separation barrier is not in contact with the collected melted raw material.

7. A process according to any one of the preceding claims, wherein one or more refining agents are provided to the flow of raw material.

8. A process according to any one of the preceding claims, wherein one or more further components are mixed with the melted raw material, said one or more further components being solid components or melted components.

9. A process according to any one of claims 1 to 8 which further comprises producing a melt comprising a mixture of the first melted raw material collected in step (iii) and a second melted raw material, said process comprising the further steps of:
(iv) providing a second solid raw material to a second melting chamber (102) and heating the second solid raw material to a temperature T₂ which is sufficient to cause melting of the second solid raw material, and collecting the melted second raw material; and
(v) discharging at least a portion of the melted first raw material collected in step (iii) and at least a portion of the melted second raw material collected in step (iv) into a homogeniser chamber (103) to provide a melt which comprises the first raw material and the second raw material.

10. A process according to claim 9, (a) wherein the first raw material comprises silica and optionally a viscosity modifier, and wherein the melt is a glass melt; and/or (b) wherein the second raw material comprises a metal oxide and optionally a viscosity modifier; and/or (c) wherein the temperature T₃ of the first melted raw material on discharge into the homogeniser chamber (103) and the temperature T₄ of the second melted raw material on discharge into the homogeniser chamber (103) differ by no more than 200°C; and/or (d) wherein T₃ and T₄ are controlled such that the second melted raw material has a higher viscosity than the first melted raw material on discharge into the homogeniser chamber.

11. A process according to any one of claims 9 to 11, which further comprises providing a third solid raw material to a third melting chamber (112), heating the third solid raw material to a temperature which is sufficient to cause melting of the third solid raw material, and collecting the melted third raw material; and either (a) discharging at least a portion of the melted third raw material into the homogeniser chamber (103) to provide a melt which is a mixture of the first, second and third raw materials; or (b) providing a second homogeniser chamber (113); discharging a portion of the first melted raw material and at least a portion of the second melted raw material into the first homogeniser chamber (103) to provide a first melt; and discharging a further portion of the first melted raw material and at least a portion of the third melted raw material into the second homogeniser chamber (113) to provide a second melt.

12. A process according to any one of the preceding claims, wherein the collected melted raw material or the melt comprising a mixture of melted raw materials is further refined and/or shaped to provide an article or artefact.

13. A melting apparatus for melting a raw material by creating a flow of raw material interrupted by a heated phase separation barrier (3), wherein the apparatus is adapted for melting the raw material by transfer of heat from the phase separation barrier (3) to the raw material, said apparatus comprising:
- a melting chamber (1) for melting raw material;
- a feed system (2) for providing solid raw material to the melting chamber;
- a phase separation barrier (3) located within the melting chamber, wherein the phase separation barrier is arranged for supporting solid raw material and for enabling any melted raw material formed on contact with the phase separation barrier to flow off or through the phase separation barrier, wherein the phase separation barrier comprises a series of upright or inclined plates (33) placed substantially in parallel, wherein the phase separation barrier is preferably made of fused quartz, iridium, platinum, a platinum/rhodium alloy or an alumina silicate ceramic, more preferably iridium;
- a heater adapted to heat the phase separation barrier to a temperature of at least 1200°C; and
- a collecting system (4) for collecting melted raw material;
wherein the phase separation barrier (3) is for separating solid and melted phases within the flow of raw material.

14. An apparatus according to claim 13, (a) wherein the phase separation barrier is located within a melting zone (30) and the collecting system is located in a collecting zone (40), and wherein the melting zone and the collecting zone are separated from one another; and/or (b) wherein the phase separation barrier (3) comprises iridium and is arranged for maintaining a film of melted raw material having a thickness of from 0.5mm to 5mm on the surface of the phase separation barrier; and/or (c) wherein the apparatus comprises one or more further melting chambers (102, 112), and wherein each melting chamber further comprises an outlet (109a, 109b) arranged to discharge melted raw material from the melting chamber; and wherein the apparatus further comprises a homogeniser chamber (103, 113) arranged for receiving melted raw material which is discharged from each melting chamber via the outlet.

15. An apparatus according to claim 14 part (c), (a) wherein each melting chamber comprises a melting zone (106) and a fining zone (107) which is separated from the melting zone, wherein the fining zone (107) is arranged to receive melted raw material from the melting zone (106) prior to its discharge through the outlet (109a, 109b); and/or (b) wherein one of the melting chambers is a major component melting chamber (101) comprising two or more outlets and the one or more further melting chambers (102, 112) are minor component melting chambers comprising one or more outlets;
and wherein the apparatus comprises two or more homogeniser chambers (103, 113), the major component melting chamber being connected to each homogeniser chamber and each homogeniser chamber being further connected to one or more minor component melting chambers.

## Patentansprüche

1. Verfahren zum Schmelzen eines Rohmaterials durch Erzeugen eines Rohmaterialstroms, der durch eine erwärmte Phasentrennbarriere (3) unterbrochen wird, wobei das Schmelzen durch Wärmeübertragung von der Phasentrennbarriere (3) auf das Rohmaterial erreicht wird, wobei das Verfahren Folgendes umfasst:
(i) Bereitstellen eines festen Rohmaterials für die Phasentrennbarriere (3), wobei die Phasentrennbarriere das feste Rohmaterial trägt;
(ii) Erhitzen der Phasentrennbarriere (3) auf eine Temperatur, die (a) mindestens 1200 °C beträgt und (b) ausreichend ist, ein Schmelzen des festen Rohmaterials zu verursachen, das die Barriere berührt, wobei jedes geschmolzene Rohmaterial, das bei Kontakt mit der Phasentrennbarriere gebildet wird, von der Phasentrennbarriere abfließt oder durch diese fließt; und
(iii) Sammeln des geschmolzenen Rohmaterials;
wobei die Übertragung von Wärme von der Phasentrennbarriere eine Trennung der festen und geschmolzenen Phasen innerhalb des Stroms des Rohmaterials verursacht, und wobei die Phasentrennbarriere eine Reihe von aufrecht stehenden oder geneigten Platten (33) umfasst, die im Wesentlichen parallel angeordnet sind.

2. Verfahren nach Anspruch 1, wobei das Rohmaterial bei einer Temperatur von 1200 °C oder mehr schmilzt und die Phasentrennbarriere auf eine Temperatur von 1200 °C oder mehr erhitzt wird.

3. Verfahren nach Anspruch 1 oder 2, wobei das Rohmaterial Glas ist und/oder wobei die Phasentrennbarriere aus geschmolzenem Quarz, Iridium, Platin, einer Platin/Rhodium-Legierung oder einer Aluminiumoxidsilikatkeramik besteht.

4. Verfahren nach Anspruch 3, wobei die Phasentrennbarriere aus Iridium besteht und wobei ein Film aus geschmolzenem Rohmaterial mit einer Dicke von 0,5 mm bis 5 mm auf der Oberfläche der Phasentrennbarriere vor dem Abfallen von der oder dem Fallen durch die Phasentrennbarriere verbleibt.

5. Verfahren nach einem der vorhergehenden Ansprüche, wobei die Phasentrennbarriere auf eine Temperatur von 1500 °C oder mehr erhitzt wird.

6. Verfahren nach einem der vorhergehenden Ansprüche, wobei die Phasentrennbarriere nicht in Kontakt mit dem gesammelten geschmolzenen Rohmaterial ist.

7. Verfahren nach einem der vorhergehenden Ansprüche, wobei ein oder mehrere Läutermittel dem Rohmaterialstrom zugeführt werden.

8. Verfahren nach einem der vorhergehenden Ansprüche, wobei eine oder mehrere weitere Komponenten mit dem geschmolzenen Rohmaterial gemischt werden, wobei die eine oder die mehreren weiteren Komponenten feste Komponenten oder geschmolzene Komponenten sind.

9. Verfahren nach einem der Ansprüche 1 bis 8, das ferner das Herstellen einer Schmelze umfasst, die eine Mischung des in Schritt (iii) gesammelten ersten geschmolzenen Rohmaterials und eines zweiten geschmolzenen Rohmaterials umfasst, wobei das Verfahren folgende weitere Schritte umfasst:
(iv) Bereitstellen eines zweiten festen Rohmaterials für eine zweite Schmelzkammer (102) und Erhitzen des zweiten festen Rohmaterials auf eine Temperatur T₂, die ausreicht, um das Schmelzen des zweiten festen Rohstoffs zu bewirken, und Sammeln des geschmolzenen zweiten Rohmaterials; und
(v) Ablassen mindestens eines Teils des in Schritt (iii) gesammelten geschmolzenen ersten Rohmaterials und mindestens eines Teils des in Schritt (iv) gesammelten geschmolzenen zweiten Rohmaterials in eine Homogenisierkammer (103), um eine Schmelze bereitzustellen, die das erste Rohmaterial und das zweite Rohmaterial umfasst.

10. Verfahren nach Anspruch 9, (a) wobei das erste Rohmaterial Siliciumdioxid und optional einen Viskositätsmodifikator umfasst und wobei die Schmelze eine Glasschmelze ist; und/oder (b) wobei das zweite Rohmaterial ein Metalloxid und optional einen Viskositätsmodifikator umfasst; und/oder (c) wobei sich die Temperatur T₃ des ersten geschmolzenen Rohmaterials beim Ablassen in die Homogenisierkammer (103) und die Temperatur T₄ des zweiten geschmolzenen Rohmaterials beim Ablassen in die Homogenisierkammer (103) um nicht mehr als 200 °C unterscheiden; und/oder (d) wobei T₃ und T₄ so geregelt werden, dass das zweite geschmolzene Rohmaterial beim Ablassen in die Homogenisierkammer eine höhere Viskosität als das erste geschmolzene Rohmaterial aufweist.

11. Verfahren nach einem der Ansprüche 9 bis 11, das ferner Folgendes umfasst: Bereitstellen eines dritten festen Rohmaterials für eine dritte Schmelzkammer (112), Erhitzen des dritten festen Rohmaterials auf eine Temperatur, die ausreicht, um das Schmelzen des dritten festen Rohmaterials zu bewirken, und Sammeln des geschmolzenen zweiten Rohmaterials; und entweder (a) Ablassen mindestens eines Teils des geschmolzenen dritten Rohmaterials in die Homogenisierkammer (103), um eine Schmelze bereitzustellen, die eine Mischung des ersten, zweiten und dritten Rohmaterials ist; oder (b) Bereitstellen einer zweiten Homogenisierkammer (113); Ablassen eines Teils des ersten geschmolzenen Rohmaterials und mindestens eines Teils des zweiten geschmolzenen Rohmaterials in die erste Homogenisierkammer (103), um eine erste Schmelze bereitzustellen; und Ablassen eines weiteren Teils des ersten geschmolzenen Rohmaterials und mindestens eines Teils des dritten geschmolzenen Rohmaterials in die zweite Homogenisierkammer (113), um eine zweite Schmelze bereitzustellen.

12. Verfahren nach einem der vorhergehenden Ansprüche, wobei das gesammelte geschmolzene Rohmaterial oder die Schmelze, die eine Mischung von geschmolzenen Rohmaterialien umfasst, ferner geläutert und/oder geformt wird, um einen Artikel oder ein Artefakt bereitzustellen.

13. Schmelzvorrichtung zum Schmelzen eines Rohmaterials durch Erzeugen eines Rohmaterialstroms, der durch eine erwärmte Phasentrennbarriere (3) unterbrochen wird, wobei die Vorrichtung zum Schmelzen des Rohmaterials durch Wärmeübertragung von der Phasentrennbarriere (3) auf das Rohmaterial ausgelegt ist, wobei die Vorrichtung Folgendes umfasst:
- eine Schmelzkammer (1) zum Schmelzen von Rohmaterial;
- ein Zuführsystem (2) zum Bereitstellen von festem Rohmaterial für die Schmelzkammer;
- eine Phasentrennbarriere (3) innerhalb der Schmelzkammer, wobei die Phasentrennbarriere angeordnet ist, um festes Rohmaterial zu tragen und zu ermöglichen, dass jedes geschmolzene Rohmaterial, das bei Kontakt mit der Phasentrennbarriere gebildet wird, von der Phasentrennbarriere abfließt oder durch diese fließt, wobei die Phasentrennbarriere eine Reihe von aufrecht stehenden oder geneigten Platten (33) umfasst, die im Wesentlichen parallel angeordnet sind, wobei die Phasentrennbarriere bevorzugt aus geschmolzenem Quarz, Iridium, Platin, einer Platin/Rhodium-Legierung oder einer Aluminiumoxidsilikatkeramik, bevorzugter aus Iridium besteht;
- eine Heizvorrichtung, die dafür ausgelegt ist, die Phasentrennbarriere auf eine Temperatur von mindestens 1200 °C zu erhitzen; und
- ein Sammelsystem (4) zum Sammeln von geschmolzenem Rohmaterial;
wobei die Phasentrennbarriere (3) zum Trennen von festen und geschmolzenen Phasen innerhalb des Rohmaterialstroms dient.

14. Vorrichtung nach Anspruch 13, (a) wobei die Phasentrennbarriere innerhalb einer Schmelzzone (30) angeordnet ist und das Sammelsystem in einer Sammelzone (40) angeordnet ist und wobei die Schmelzzone und die Sammelzone voneinander getrennt sind; und/oder (b) wobei die Phasentrennbarriere (3) Iridium umfasst und so angeordnet ist, dass sie einen Film aus geschmolzenem Rohmaterial aufrechterhält, der eine Dicke von 0,5 mm bis 5 mm auf der Oberfläche der Phasentrennbarriere aufweist; und/oder (c) wobei die Vorrichtung eine oder mehrere weitere Schmelzkammern (102, 112) aufweist und wobei jede Schmelzkammer ferner einen Auslass (109a, 109b) umfasst, der angeordnet ist, um geschmolzenes Rohmaterial aus der Schmelzkammer abzulassen; und wobei die Vorrichtung ferner eine Homogenisierkammer (103, 113) umfasst, die zum Aufnehmen von geschmolzenem Rohmaterial angeordnet ist, das aus jeder Schmelzkammer über den Auslass abgelassen wird.

15. Vorrichtung nach Anspruch 14, Teil (c), (a) wobei jede Schmelzkammer eine Schmelzzone (106) und eine Läuterzone (107) umfasst, die von der Schmelzzone getrennt ist, wobei die Läuterzone (107) angeordnet ist, um geschmolzenes Rohmaterial von der Schmelzzone (106) vor dessen Ablassen durch den Auslass (109a, 109b) aufzunehmen; und/oder (b) wobei eine der Schmelzkammern eine Hauptkomponenten-Schmelzkammer (101) ist, die zwei oder mehr Auslässe umfasst, und die eine oder die mehreren weiteren Schmelzkammern (102, 112) Nebenkomponenten-Schmelzkammern sind, die einen oder mehrere Auslässe umfassen;
und wobei die Vorrichtung zwei oder mehr Homogenisierkammern (103, 113) umfasst, wobei die Hauptkomponenten-Schmelzkammer mit jeder Homogenisierkammer verbunden ist und jede Homogenisierkammer ferner mit einer oder mehreren Nebenkomponenten-Schmelzkammern verbunden ist.

## Revendications

1. Procédé de fusion d'une matière première par création d'un écoulement de matière première interrompu par une barrière chauffée de séparation de phases (3), la fusion étant obtenue par le transfert de chaleur de la barrière de séparation de phases (3) à la matière première, lequel procédé comprend :
(i) l'apport de matière première solide à la barrière de séparation de phases (3), la barrière de séparation de phases soutenant la matière première solide ;
(ii) le chauffage de la barrière de séparation de phases (3) à une température qui est (a) au moins de 1200 °C et (b) suffisante pour entraîner la fusion de la matière première solide qui entre en contact avec la barrière, toute matière première fondue formée au contact de la barrière de séparation de phases s'écoulant de la barrière de séparation de phases ou à travers celle-ci ; et
(iii) la collecte de la matière première fondue ;
dans lequel le transfert de chaleur de la barrière de séparation de phases entraîne la séparation des phases solides et fondues dans l'écoulement de la matière première, et dans lequel la barrière de séparation de phases comprend une série de plaques verticales et inclinées (33) placées sensiblement parallèlement.

2. Procédé selon la revendication 1, dans lequel la matière première fond à une température de 1200 °C ou plus et la barrière de séparation de phases est chauffée à une température de 1200 °C ou plus.

3. Procédé selon la revendication 1 ou 2, dans lequel la matière première est le verre, et/ou dans lequel la barrière de séparation de phases est constituée de quartz, iridium, platine fondu, d'un alliage de platine/rhodium ou d'une céramique de silicate d'alumine.

4. Procédé selon la revendication 3, dans lequel la barrière de séparation de phases est constituée d'iridium et dans lequel un film de matière première fondue présentant une épaisseur allant de 0,5 mm à 5 mm reste sur la surface de la barrière de séparation de phases avant de tomber de la barrière de séparation de phases ou à travers celle-ci.

5. Procédé selon l'une quelconque des revendications précédentes, dans lequel la barrière de séparation de phases est chauffée à une température de 1500 °C ou plus.

6. Procédé selon l'une quelconque des revendications précédentes, dans lequel la barrière de séparation de phases n'est pas en contact avec la matière première fondue collectée.

7. Procédé selon l'une quelconque des revendications précédentes, dans lequel au moins un agent d'affinage est fourni à l'écoulement de matière première.

8. Procédé selon l'une quelconque des revendications précédentes, dans lequel au moins un autre composant est mélangé avec la matière première fondue, ledit au moins un autre composant étant un composant solide ou un composant fondu.

9. Procédé selon l'une quelconque des revendications 1 à 8, qui comprend en outre la production d'une matière fondue comprenant un mélange de la première matière première fondue collectée dans l'étape (iii) et une deuxième matière première fondue, ledit procédé comprenant les autres étapes de :
(iv) apport d'une deuxième matière première solide à une deuxième chambre de fusion (102) et chauffage de la deuxième matière première solide à une température T₂ qui est suffisante pour entraîner la fusion de la deuxième matière première solide, et collecte de la deuxième matière première fondue ; et
(v) déchargement d'au moins une partie de la première matière première fondue collectée dans l'étape (iii) et d'au moins une partie de la deuxième matière première fondue collectée dans l'étape (iv) dans une chambre d'homogénéisateur (103) pour produire une fusion qui comprend la première matière première et la deuxième matière première.

10. Procédé selon la revendication 9, (a) dans lequel la première matière première comprend la silice et éventuellement un modificateur de viscosité, et dans lequel la matière fondue est une masse vitreuse en fusion ; et/ou (b) dans lequel la deuxième matière première comprend un oxyde métallique et éventuellement un modificateur de viscosité ; et/ou (c) dans lequel la température T₃ de la première matière première fondue lors du déchargement dans la chambre d'homogénéisateur (103) et la température T₄ de la deuxième matière première fondue lors du déchargement dans la chambre d'homogénéisateur (103) diffèrent de pas plus de 200 °C ; et/ou (d) dans lequel T₃ et T₄ sont régulées de manière que la deuxième matière première fondue présente une viscosité supérieure à la première matière première fondue lors du déchargement dans la chambre d'homogénéisateur.

11. Procédé selon l'une quelconque des revendications 9 à 11, qui comprend en outre l'apport d'une troisième matière première solide à une troisième chambre de fusion (112), le chauffage de la troisième matière première solide à une température qui est suffisante pour entraîner la fusion de la troisième matière première solide, et la collecte de la troisième matière première fondue ; et soit (a) le déchargement d'au moins une partie de la troisième matière première fondue dans la chambre d'homogénéisateur (103) pour produire une matière fondue qui est un mélange des première, deuxième et troisième matières premières ; soit (b) l'apport d'une deuxième chambre d'homogénéisateur (113) ; le déchargement d'une partie de la première matière première fondue et d'au moins une partie de la deuxième matière première fondue dans la chambre d'homogénéisateur (103) pour produire une première matière fondue ; et le déchargement d'une autre partie de la première matière première fondue et d'au moins une partie de la troisième matière première fondue dans la deuxième chambre d'homogénéisateur (113) pour produire une deuxième matière fondue.

12. Procédé selon l'une quelconque des revendications précédentes, dans lequel la matière première fondue collectée ou la matière fondue comprenant un mélange de matières premières fondues est en outre affinée et/ou formée pour produire un article ou un artéfact.

13. Appareil de fusion destiné à fondre une matière première par création d'un écoulement de matière première interrompu par une barrière chauffée de séparation de phases (3), l'appareil étant conçu pour fondre la matière première en transférant la chaleur de la barrière de séparation de phases (3) à la matière première, ledit appareil comprenant :
- une chambre de fusion (1) destinée à fondre la matière première ;
- un système d'alimentation (2) destiné à fournir la matière première solide à la chambre de fusion ;
- une barrière de séparation de phases (3) située à l'intérieur de la chambre de fusion, la barrière de séparation de phases étant conçue pour soutenir la matière première solide et pour permettre à une quelconque matière première fondue formée au contact de la barrière de séparation de phases de s'écouler de la barrière de séparation de phases ou à travers celle-ci, la barrière de séparation de phases comprenant une série de plaques verticales ou inclinées (33) placées sensiblement parallèlement, la barrière de séparation de phases étant de préférence constituée de quartz, iridium, platine fondu, d'un alliage de platine/rhodium ou d'une céramique de silicate d'alumine, de manière davantage préférée d'iridium ;
- un chauffage conçu pour chauffer la barrière de séparation de phases à une température d'au moins 1200 °C ; et
- un système de collecte (4) destiné à collecter la matière première fondue ;
la barrière de séparation de phases (3) étant destinée à séparer les phases solides et fondues dans l'écoulement de matière première.

14. Appareil selon la revendication 13, (a) dans lequel la barrière de séparation de phases est située dans une zone de fusion (30) et le système de collecte est situé dans une zone de collecte (40), et dans lequel la zone de fusion et la zone de collecte sont séparées l'une de l'autre ; et/ou (b) dans lequel la barrière de séparation de phases (3) comprend l'iridium et est conçue pour maintenir un film de matière première fondue présentant une épaisseur allant de 0,5 mm à 5 mm sur la surface de la barrière de séparation de phases ; et/ou (c) dans lequel l'appareil comprend au moins une autre chambre de fusion (102, 112), et dans lequel chaque chambre de fusion comprend en outre une sortie (109a, 109b) conçue pour décharger la matière première fondue de la chambre de fusion ; et dans lequel l'appareil comprend en outre une chambre d'homogénéisateur (103, 113) conçue pour recevoir la matière première fondue qui est déchargée de chaque chambre de fusion par le biais de la sortie.

15. Appareil selon la revendication 14 parties (c), (a), dans lequel chaque chambre de fusion comprend une zone de fusion (106) et une zone d'affinage (107) qui est séparée de la zone de fusion, la zone d'affinage (107) étant conçue pour recevoir la matière première fondue de la zone de fusion (106) avant son déchargement par la sortie (109a, 109b) ; et/ou (b) dans lequel une des chambres de fusion est une chambre de fusion de composant majeur (101) comprenant au moins deux sorties et l'au moins une autre chambre de fusion (102, 112) étant une chambre de fusion de composant mineur comprenant au moins une sortie ;
et dans lequel l'appareil comprend au moins deux chambres d'homogénéisateur (103, 113), la chambre de fusion de composant majeur étant reliée à chaque chambre d'homogénéisateur et chaque chambre d'homogénéisateur étant en outre reliée à au moins une chambre de fusion de composant mineur.
